# FASCICULE DE BREVET EUROPEEN

(11) **EP 4 039 073 B1**
(45) Date de publication et mention de la délivrance du brevet: **15.11.2023**
(21) Numéro de dépôt: 22152875.5
(22) Date de dépôt: 24.01.2022
(51) Int. Cl.: A01B 73/04

(54) **DISPOSITIF DE REPLIAGE DE TRANSPORT PAR MÉCANISME ARTICULÉ**
KLAPPVORRICHTUNG FÜR TRANSPORT MIT GELENKMECHANISMUS
FOLDING DEVICE FOR TRANSPORT BY ARTICULATED MECHANISM

(30) Priorité: 08.02.2021 BE 202105095
(43) Date de publication de la demande: 10.08.2022
(73) Titulaire: Ets JOSKIN S.A., 4630 Soumagne (BE)
(72) Inventeur: JOSKIN, Victor, 4633 MELEN (BE)
(74) Mandataire: AWA Benelux

(56) Documents cités:
- DE-A1- 3 616 403
- US-A- 5 921 325
- US-A1- 2006 225 900

## Description

### Objet de l'invention

La présente invention a trait au domaine de l'agriculture, en particulier à un cultivateur, c'est-à-dire un engin agricole de travail du sol et/ou d'épandage, par exemple de labourage, hersage ou injection de fertilisant liquide ou semi-liquide, qui soit de grande largeur et destiné soit à être attelé à un engin automoteur de traction ou un engin tracté ou semi-porté de transport, par exemple un tonneau à lisier, soit à être intégré à l'un de ces engins.

La présente invention concerne plus précisément un dispositif de rétractation d'une section terminale des ailes latérales repliables d'un cultivateur.

### Arrière-plan technologique et état de la technique

Les contraintes de productivité des engins agricoles ne cessent d'augmenter. Afin qu'une exploitation agricole puisse préserver sa rentabilité, ses matériels doivent pouvoir travailler la même surface unitaire en moins de temps. La piste d'une augmentation de la vitesse de roulage n'offre pas de larges perspectives. En effet, sur les terrains agricoles inégaux, une vitesse de déplacement trop élevée se traduit inévitablement par une souffrance mécanique élevée, tant pour les matériels que pour les hommes qui les conduisent. Cette combinaison entraîne également une qualité du travail du sol médiocre. Depuis des lustres, la piste privilégiée est alors l'augmentation de la largeur de travail des engins, entraînant la difficulté corollaire de leur transport sur la voie publique dans le respect des gabarits autorisés et avec la sécurité nécessaire.

L'homme du métier, en visant une augmentation de la largeur des engins, doit toutefois écarter certaines solutions, comme celles d'une configuration de machine semi-portée ou traînée sur roues sur la voie publique, synonyme d'encombrement beaucoup trop important et de coût de construction très nettement supérieur. A l'inverse, il doit rechercher une configuration « compacte » alliant encombrement restreint pour une largeur de travail maximale, à une masse et un porte-à-faux adaptés aux tracteurs et autres engins porteurs tels qu'un épandeur de lisier. Encore faut-il assurer une stabilité physique suffisante et une résistance adaptée au travail, de même que s'inscrire dans le gabarit routier autorisé tout en préservant la cabine du tracteur et/ou l'engin porteur et ses accessoires.

De multiples dispositifs de repliage d'engins prévus pour faciliter leur transport ont été proposés. Habituellement, ils comprennent deux ailes de travail latérales articulées autour d'un cadre porteur comprenant ou non une section de travail centrale fixe.

Pour atteindre des grandes largeurs au travail mais rester dans un gabarit routier au transport (largeur 3 m, hauteur 4 m y compris véhicule porteur), l'homme du métier a développé des ailes repliables sur elles-mêmes. Par exemple, US 3,321,028 A propose déjà un repliage serpentin des ailes latérales. Un dispositif similaire avec un seul repliage interne des ailes dans leur propre plan transversal est divulgué dans EP 1 008 286 A1.

Le document DE 36 16 403 A1 se rapporte à une machine pour le travail du sol, en particulier à une bineuse pour les cultures hautes en rangs, comme par exemple le maïs, avec une poutre de machine en plusieurs parties, pouvant être montée sur le système hydraulique à trois points d'un tracteur agricole, s'étendant, dans une position de travail, essentiellement horizontalement et transversalement à la direction de déplacement, portant des outils disposés à distance les uns à côté des autres, sur laquelle peuvent être montées des structures, comme par exemple des caisses d'engrais, et qui comprend au moins une partie de poutre latérale pouvant être fixée à un corps de poutre principal central et pouvant pivoter vers l'intérieur dans une position de transport surélevée au moyen d'un dispositif de levage mécanique présentant de préférence un bras pivotant guidé par un parallélogramme.

D'autres engins ont encore été proposés pour répondre à ce problème.

US 6,675,907 B2 propose de replier, à l'opposé du point d'accrochage de l'engin, une partie de ses ailes dans un plan perpendiculaire à elles-mêmes. Pareil dispositif n'est envisageable que si le gabarit routier légal permet pareil débordement vers l'arrière, ce qui est de moins en moins le cas avec les grands engins contemporains, surtout lorsqu'ils sont fixés au dos d'une remorque porteuse comme dans le cas d'un injecteur de lisier. On notera en outre qu'un pli des ailes en direction inverse, soit vers l'avant de l'engin, n'est possible que si l'engin porteur ménage la place nécessaire aux sections ainsi pliées : ici encore, ce n'est quasiment plus jamais le cas sur les grands charrois contemporains.

EP 1 813 150 B1 propose une réduction de largeur des ailes pour le transport en combinant pliage articulé et déplacement télescopique de segments glissant l'un devant l'autre. Pareil dispositif pensé pour une rampe de pulvérisation est cependant difficilement compatible avec des engins dont la structure est composée de cadres multi-poutres supportant des outils de travail relativement volumineux et lourds.

WO 2013/135444 A1 propose de combiner le repliage partiel perpendiculaire de US 6,675,907 B2 et un repliage portefeuille interne tel que décrit dans EP 1 008 286 A1. Cette solution n'est envisageable que si le charroi routier dispose d'espace à l'arrière dans le gabarit légal et si les outils portés sur les ailes autorisent le repliage interne dans le respect de la largeur de transport. Ce n'est pas souvent le cas pour les cultivateurs, surtout lorsqu'ils comprennent des tuyaux d'alimentation chargés de transporter du lisier vers les outils cultivateurs (injecteurs de lisier). L'amélioration de la charnière de section terminale proposée dans WO 2015/002601 A1 n'y change rien.

Enfin, DK 2015 70026 A1, également publié sous EP 3 047 717 A1, propose de faire coulisser les tubes porteurs de deux sections terminales disposées aux deux extrémités de l'aile dans les tubes structuraux de l'aile. Pareil dispositif est intéressant mais génère des masses excessives pour garantir à la fois la stabilité des ailes et des sections terminales tout en garantissant un coulissement précis et durable.

### But de l'invention

L'invention a pour objectif de pallier au moins un des inconvénients de l'état de la technique susmentionné, en particulier de proposer un cultivateur à la fois simplifié et plus compact que dans les documents susdits.

Plus particulièrement, l'invention a pour but de fournir un mécanisme de réduction de la longueur des ailes latérales d'un cultivateur de sorte que ces ailes occupent une hauteur et une largeur limitées au gabarit de transport légal lorsqu'elles sont repliées.

### Principaux éléments caractéristiques de l'invention

La présente invention se rapporte à un cultivateur pour le travail du sol comportant trois parties, à savoir une structure axiale portante centrale et des sections ou ailes latérales repliables dans une position sensiblement verticale autour de ladite structure axiale portante centrale, ainsi qu'une structure pour ces trois parties constituée de poutres transversales et de poutres longitudinales, et supportant des outils,
**caractérisé en ce que** chaque section ou aile latérale comprend un corps d'aile et un segment terminal reliés mécaniquement à l'aide d'au moins deux bras de liaison fixés d'un côté au corps d'aile et de l'autre côté au segment terminal au moyen de pivots, de sorte que le corps d'aile, le segment terminal et les bras de liaison sont les éléments formant conjointement un mécanisme quadrilatéral articulé, mobile et déformable à la manière d'un pantographe ;
les pivots respectifs des bras de liaison ayant, d'un bras de liaison à l'autre, une position déportée latéralement considérant l'axe de déplacement du cultivateur, de sorte que lesdits bras de liaison se positionnent côte à côte dans ledit axe de déplacement de manière légèrement décalée lorsque le mécanisme quadrilatéral articulé est rétracté.

Selon des modes d'exécution avantageux de l'invention, le cultivateur comprend une ou plusieurs des caractéristiques techniques suivantes, selon toute combinaison possible :
- le segment terminal est en position déployée de travail lorsque les bras de liaison sont en travers du sens de marche, et en position rétractée de transport lorsque les bras de liaison sont dans le sens de marche ;
- au sein de chaque aile, la répartition des poutres transversales entre corps d'aile et segment terminal est telle que, une fois le mécanisme quadrilatéral rétracté, une poutre longitudinale de liaison du segment terminal est accolée à très faible distance de l'extrémité extérieure du corps d'aile ;
- les éléments formant les côtés opposés du mécanisme quadrilatéral articulé, à savoir les bras de liaison d'une part, le corps d'aile et le segment terminal d'autre part, sont parallèles l'un à l'autre dans toute position du parallélogramme déformable dudit mécanisme quadrilatéral ;
- deux desdits éléments du mécanisme quadrilatéral, formant côtés adjacents, sont liés par un dispositif de puissance actionnable à distance ;
- des butées sont placées sur les poutres transversales pour arrêter les bras de liaison, lors du déploiement dudit mécanisme ;
- chaque aile est fixée sur une structure axiale par rapport au sens de la marche du cultivateur de manière à pouvoir pivoter autour de cet axe d'une position de travail sensiblement horizontale à une position de transport sensiblement verticale, et vice versa ;
- les axes de rotation des pivots sont orthogonaux aux axes de rotation des liaisons articulant les ailes à la structure centrale axiale ;
- chacun des segments terminaux comprend au moins une roue de jauge ;
- au sein du segment terminal, un outil spécifique est fixé à ladite poutre longitudinale terminale au moyen d'une entretoise de déport, décalant ledit outil spécifique vers l'avant par rapport aux autres outils de même type sur une rangée de l'aile.

Un autre aspect de l'invention concerne un engin automoteur ou un engin tracté ou semi-porté intégrant un cultivateur comme décrit ci-dessus, de préférence celui comportant un réservoir destiné à contenir un produit de fertilisation agricole, notamment de l'engrais ou du lisier.

### Description brève des figures

Des exemples de réalisation suivant l'invention sont décrits par la suite avec plus de détails à l'aide des figures annexées.

Par convention, pour les besoins de la description de ces figures, les termes avant, arrière, gauche et droit, de même que les nombres ordinaux, sont considérés par rapport au sens de marche du charroi (représenté par une grosse flèche de direction), les éléments examinés séparément devant être considérés dans leur position normale au sein du charroi complet. De manière similaire, les éléments structuraux tels des poutres seront qualifiés de longitudinaux et transversaux s'ils sont positionnés dans le sens de la marche, respectivement dans le sens perpendiculaire au sens de la marche.
La **Figure 1A** montre un charroi de profil comprenant un cultivateur selon l'invention.
La **Figure 1B** montre le même charroi vu depuis l'arrière du cultivateur.
La **Figure 2** montre une vue en plan du cultivateur selon l'invention détaché de son engin porteur et dont les ailes sont dépliées à l'horizontale. A titre illustratif, l'allonge pantographe disposée à droite est déployée en position de travail, celle disposée à gauche est rétractée en une positon de transport.
La **Figure 3A** représente l'aile gauche d'un cultivateur selon l'invention en position de déploiement pour permettre le travail du sol. La présente représentation de l'aile gauche est arbitraire et sans conséquence sachant que la représentation de l'aile droite conduit à un dessin parfaitement symétrique.
La **Figure 3B** représente l'aile gauche du cultivateur correspondant à la **Figure 3A** dans une position intermédiaire entre la position de déploiement susdite et une position rétractée.
La **Figure 3C** représente enfin l'aile gauche du cultivateur correspondant aux **Figures 3A** et **3B** dans la position rétractée adaptée pour le transport quand l'aile est relevée.

### Description de modes d'exécution préférés de l'invention

Dans la description qui suit, des éléments similaires dans les illustrations sont affectés dans la mesure du possible de repères numériques identiques. Toutes les dimensions décrites ou suggérées ici ne sont pas destinées à limiter la portée de l'invention, laquelle peut s'écarter de ces dimensions. De même, le design structurel des composants suggéré dans les illustrations n'est nullement caractéristique de l'invention.

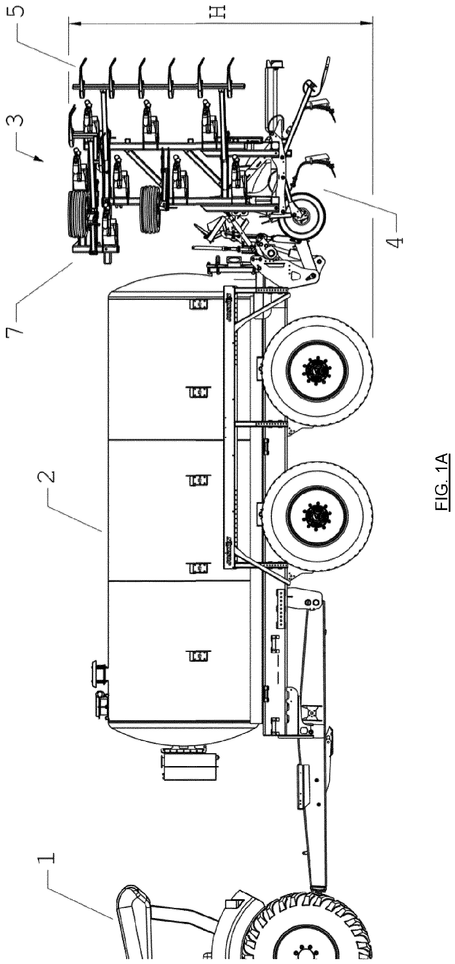

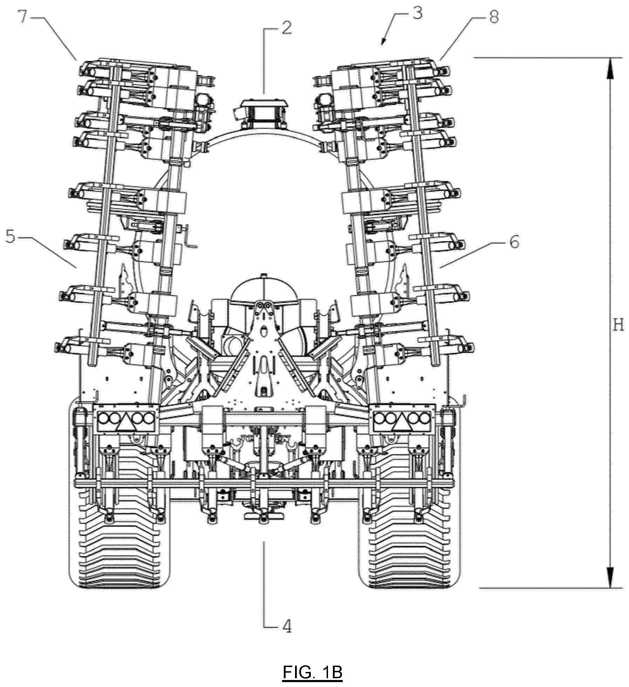

Les **Figures 1A** et **1B** illustrent un charroi agricole composé d'un tracteur **1** partiellement représenté, d'une remorque-citerne **2** attelée au tracteur **1** et destinée à l'épandage de lisiers et dont certains organes, non nécessaires à la description, ne sont pas représentés, et d'un cultivateur **3,** en l'espèce un injecteur de lisier pour cultures, accroché en position de transport au dos de la remorque **2.** Le cultivateur **3** est composé dans cet exemple d'une section centrale **4** (mais celle-ci peut être absente sans que l'on s'écarte du concept de l'invention) et de deux ailes latérales gauche **5** et droite **6** (ici en position de transport relevée), respectivement munies d'une allonge pantographe selon l'invention, l'une gauche **7** et l'autre droite **8.** Une flèche de distance repérée au moyen de la lettre H explicite l'objectif recherché, à savoir garder le gabarit de transport du cultivateur en deçà de la hauteur maximale légalement autorisée.

L'expression allonge pantographe sera définie ci-dessous.

La **Figure 1A** montre ce charroi de profil gauche, d'où les éléments droits ne sont pas visibles.

La **Figure 1B** montre le même charroi vu de l'arrière, d'où le tracteur **1** n'est pas visible. Sur l'une et l'autre figures, les allonges pantographes **7** et **8** sont ramenées en position rétractée, en sorte qu'en position de transport, le sommet du cultivateur **3** ne dépasse pas la hauteur légale autorisée **H.**

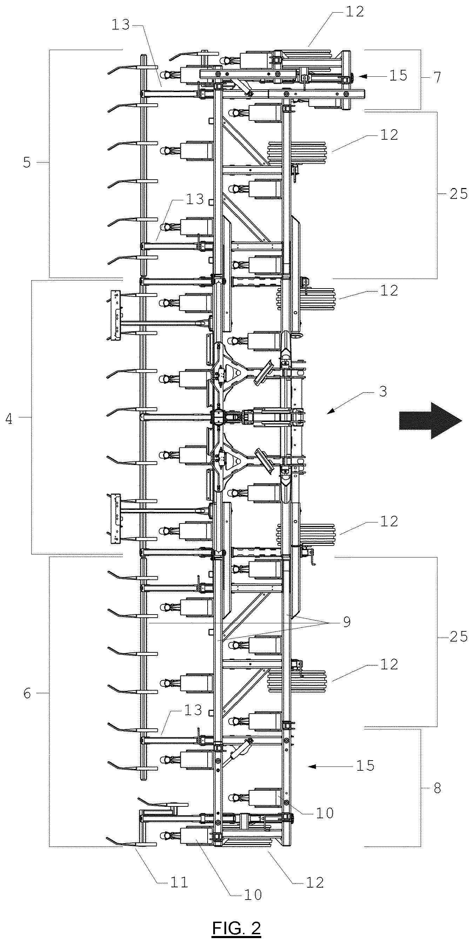

La **Figure 2** montre une vue en plan (c'est-à-dire du dessus), du cultivateur **3** détaché de son engin porteur **2.** On distingue la section centrale **4** et les deux ailes latérales gauche **5** et droite **6.** Ces trois parties peuvent comporter trois rangées de poutres transversales **9 :** d'une part, une première et une deuxième rangées de poutres **9** peuvent porter une série de blocs cultivateurs-injecteurs **10** et, d'autre part, une troisième rangée de poutres **9** peut porter des dents égalisatrices **11** (on notera que seuls les deux blocs **10** et la dent égalisatrice **11** à l'extrême droite sont munis d'un repère pour ne pas nuire à la clarté de la figure). Des roues de jauge **12** peuvent être disposées, par exemple sur la première rangée de poutres **9.** Enfin, la première, la deuxième et la troisième rangées de poutres **9** sont en outre reliées par plusieurs poutres de liaison longitudinales **13.**

Chaque aile latérale gauche **5** ou droite **6** est composée d'un segment intérieur ou corps d'aile **25,** fixe (considéré par rapport à l'aile elle-même) et d'un segment terminal **15,** mobile, dit « allonge pantographe », le segment intérieur **25** supportant le segment terminal **15.** Ces deux segments intérieur **25** et terminal **15** comportent les éléments décrits au paragraphe précédent, à savoir les poutres **9,** les blocs cultivateurs-injecteurs **10,** les dents égalisatrices **11** et roues de jauge **12,** ainsi qu'il sera décrit plus en détail ci-dessous, en même temps que le dispositif mécanique qui les relie.

Sur la **Figure 2****,** l'allonge pantographe gauche **7** est en position rétractée (retrait) en prévision du transport alors que l'allonge pantographe droite **8** est en position déployée en prévision du travail du sol. Ainsi, la longueur de l'aile gauche **5** est drastiquement réduite par rapport à celle de l'aile droite **6.** Il en résulte que, si les ailes **5** et **6** du cultivateur **3** étaient repliées en l'état, l'aile gauche **5** se maintiendrait dans les limites de la hauteur légale autorisée (voir H en Figure 1) alors que l'aile droite **6** dépasserait fortement cette hauteur.

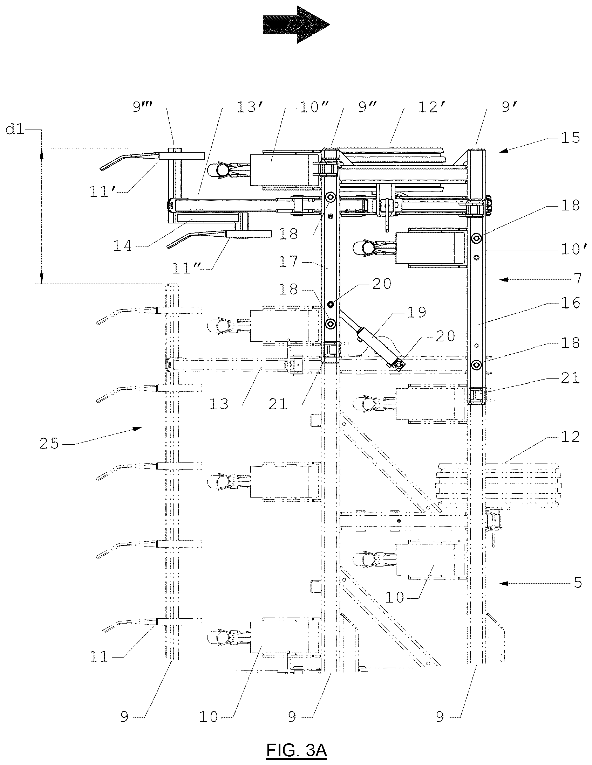

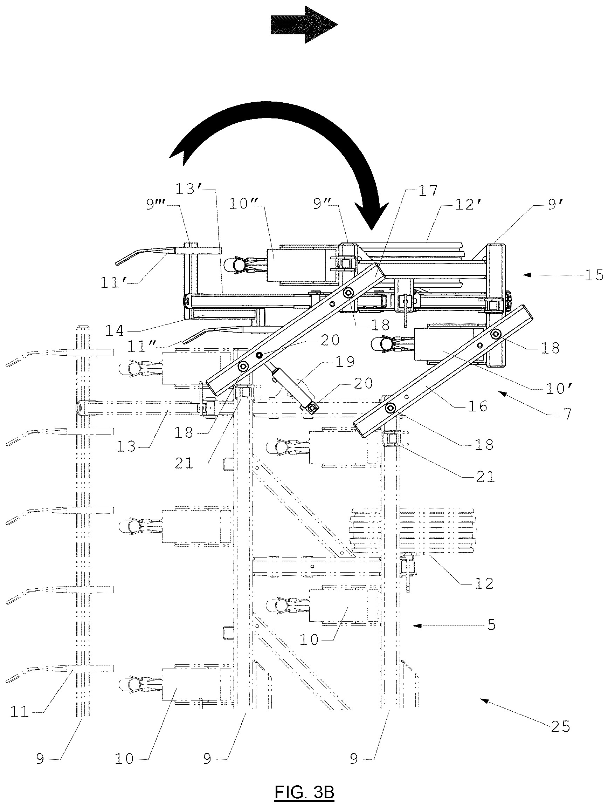

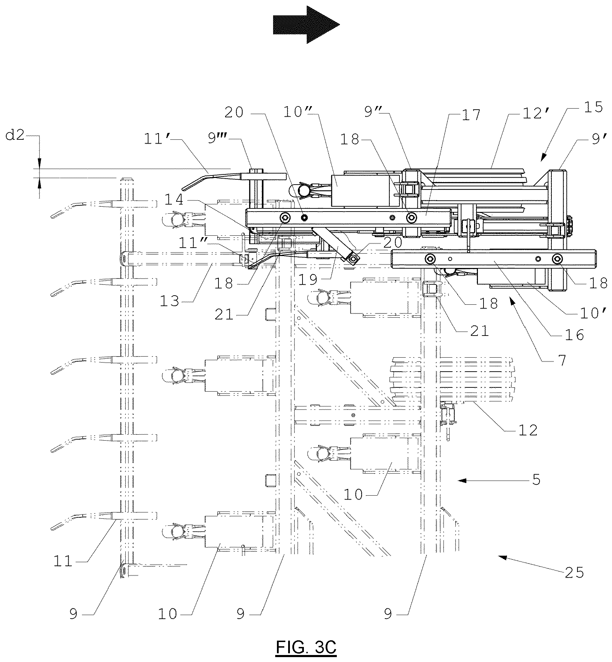

La cinématique d'une allonge pantographe **7, 8** selon l'invention est explicitée dans les **Figures 3A****,** **3B** et **3C** représentant le mouvement d'une allonge pantographe gauche **7** en figurant celle-ci dans trois positions successives au sein de l'aile latérale gauche **5** qui la porte ou plus exactement par rapport au segment intérieur **25** de celle-ci, depuis une position déployée pour le travail **(****Figure 3A****)** jusqu'à une position rétractée pour le transport **(****Figure 3C****),** en passant par une position intermédiaire **(****Figure 3B****).**

Considérant les **Figures 3A****,** **3B** et **3C****,** on entend par allonge pantographe un système mécanique formé par l'ensemble constitué d'au moins deux bras de liaison **16, 17** en combinaison avec le segment terminal **15** et le segment intérieur **25** du cultivateur **3,** gauche ou droite.

Sur ces trois figures, il apparaît clairement que l'aile latérale gauche **5** comporte une ligne de subdivision entre la partie fixe **25** de l'aile et la partie mobile **15** de celle-ci, en sorte que tous les composants de la partie **15** puissent se coller au plus près des derniers éléments de la partie **25,** contre ou derrière ceux-ci. La position de cette ligne de subdivision n'est pas arbitraire et la cinématique doit soigneusement être étudiée de manière à garantir un écart constant des outils **10, 11** au travail et un rangement dans un gabarit défini au transport.

Les éléments que comporte le segment intérieur **25,** notamment les poutres transversales **9** constituant des rangées comme indiqué ci-dessus, des blocs cultivateurs-injecteurs **10** (aussi dénommés injecteurs), des dents égalisatrices (aussi dénommées dents) **11,** des roues de jauge **12** et une poutre de liaison longitudinale **13** ont été représentés en traits discontinus pour faciliter la compréhension et permettre de bien distinguer les éléments de ce segment intérieur **25** de l'aile latérale **5** gauche par rapport aux éléments mobiles de l'allonge pantographe gauche **7,** dont le segment terminal **15** (ceux-ci étant en traits pleins).

Le lecteur comprendra que des figures « miroir » des **Figures 3A** à **3C** représentent de manière similaire une allonge pantographe droite **8** disposée sur une aile latérale droite **6.**

De manière analogue au segment intérieur **25,** ledit segment terminal **15** appartenant à l'allonge pantographe gauche **7** est composée notamment d'une poutre de liaison longitudinale **13',** reliée perpendiculairement à trois sections de poutre transversales **9', 9"** et **9‴** et qui se trouvent dans le prolongement des poutres transversales **9** du segment intérieur **25.**

La première section de poutre **9'** est maintenue approximativement en son centre par la poutre longitudinale **13',** au moyen d'une fixation quelconque. Cette première section de poutre **9'** supporte, au moyen d'une fixation quelconque, une roue de jauge **12'** disposée dans sa partie gauche et orientée vers l'arrière, ainsi qu'un bloc cultivateur-injecteur **10'** disposé dans sa partie droite, l'un et l'autre étant fixés à la première section de poutre **9'.**

La deuxième section de poutre **9",** de longueur soigneusement étudiée pour s'accoler au corps de l'aile **25** quand l'allonge est rétractée, par exemple de longueur quasi moitié moindre que la première section **9',** est liée de façon perpendiculaire, à son extrémité droite, à la poutre longitudinale terminale **13'** au moyen d'une fixation quelconque. Elle supporte, au moyen d'une fixation quelconque, un bloc cultivateur-injecteur **10"** disposé à son extrême gauche dans le même axe que la roue de jauge **12'.**

La troisième section de poutre **9‴**, de longueur légèrement supérieure à celle la deuxième poutre **9",** est fixée perpendiculairement à la poutre longitudinale **13'** au moyen d'une fixation quelconque à hauteur d'une zone proche d'une de ses extrémités, côté corps de l'aile **25.** Elle porte, au moyen d'une fixation quelconque, une dent égalisatrice **11'** disposée à son extrême gauche dans (sensiblement) le même axe longitudinal que le bloc cultivateur-injecteur **10"** et une dent égalisatrice **11"** disposée à son extrême droite dans (sensiblement) le même axe longitudinal que le bloc cultivateur-injecteur **10'.** La fixation de la dent égalisatrice **11"** est conçue avec une entretoise de déport **14** de sorte que la dent **11"** se place dans une position plus intérieure que la dent égalisatrice **11'** en direction de la deuxième section de poutre **9".**

La poutre longitudinale terminale **13',** les sections de poutre **9', 9", 9‴** et les éléments **10', 10", 11', 11", 12', 14** composent le segment terminal **15** qui forme une structure rigide en ce sens que la position relative desdits éléments les uns par rapport aux autres est fixe et invariable (hors éventuel effet de suspension des éléments de fixation et/ou déformations élastiques).

Le segment terminal **15** de l'aile gauche **5** est lié au corps d'aile **25** correspondant au moyen de deux entretoises mobiles (aussi dénommées bras de liaison) respectivement avant **16** et arrière **17,** attachées à chaque extrémité au moyen d'une fixation pivotante (aussi dénommée pivot) **18,** par exemple un piton soudé s'insérant dans un alésage avec douille ou buselure et maintenu par une bague ou une goupille. L'entretoise mobile avant **16** est liée d'un côté à la section de poutre **9'** et de l'autre à la poutre **9** de la première rangée du corps d'aile **25.** L'entretoise mobile arrière **17** est liée d'un côté à la deuxième section de poutre **9"** et de l'autre à la poutre **9** de la deuxième rangée du corps d'aile **25.** Enfin, un dispositif de puissance quelconque (aussi dénommé actionneur), par exemple un vérin hydraulique double effet **19,** lie la poutre longitudinale de liaison **13** externe du corps d'aile **25** et l'entretoise mobile arrière **17,** au moyen de fixations pivotantes quelconques **20.**

Le segment terminal **15,** la poutre longitudinale **13** externe et les deux entretoises mobiles avant **16** et arrière **17** forment ainsi un mécanisme quadrilatéral articulé (ou « mécanisme à quatre barres ») qui, à la manière par exemple du pantographe ferroviaire, peut être déployé ou au contraire rétracté au moyen d'un simple dispositif de puissance tel que le vérin hydraulique double effet **19.**

En **Figure 3A**, le vérin **19** est en configuration tige sortie et l'allonge pantographe **7** est déployée en position de travail, l'écartement transversal des blocs cultivateurs-injecteurs **10'** et **10"** ainsi que des dents égalisatrices **11'** et **11"** étant précisément identique à celui des éléments correspondants disposés sur le reste de l'aile gauche **5.**

En **Figure 3B****,** une pression hydraulique est exercée côté tige du vérin **19** de sorte que l'allonge pantographe **7** est progressivement rétractée dans un mouvement rotatif vers l'aile gauche **5** et vers l'avant du cultivateur **3.**

En **Figure 3C****,** le vérin **19** est en configuration tige complètement rentrée et l'allonge pantographe **7** est en position complètement rétractée : elle est alors parfaitement rangée le long de l'aile gauche **5.**

Il est à noter que l'encombrement en position de travail, repéré **d1** en **Figure 3A****,** est considérablement réduit en bout de course, comme l'indique le repère **d2** en **Figure 3C****.** Dans l'exemple illustré d'exécution de l'invention, cet encombrement **d2** est réduit à seulement 100 mm pour un encombrement de travail **d1** de 750 mm ; grâce à l'invention, l'utilisateur dispose ainsi d'un cultivateur occupant seulement 10 cm de plus en hauteur au transport, mais travaillant sur une largeur supérieure de 150 cm. Il va de soi que ces distances sont purement illustratives et ne constituent pas un élément essentiel de l'invention. Par contre, la réduction de la distance d1 est l'effet caractéristique de l'invention.

Cette performance est atteinte grâce à la cinématique du dispositif précisément étudiée pour qu'en position rétractée de l'allonge pantographe **7,** les éléments de travail **10', 10", 11'** et **11"** se rangent proprement derrière les éléments **10** et **11** correspondants situés à l'extrémité gauche de la partie fixe de l'aile gauche **5,** permettant d'atteindre l'encombrement réduit **d2.** Cette cinématique est rendue possible par la position précise des fixations pivotantes **18.** En effet, les pivots **18** liés aux poutres **9, 9"** appartenant respectivement à la deuxième rangée du corps d'aile **25** et au segment terminal **15** sont déportés vers la gauche par rapport aux pivots **18** liés aux poutres **9** et **9'** appartenant respectivement à la première rangée du corps d'aile **25** et au segment terminal **15.** On obtient ainsi le mécanisme quadrilatéral articulé qui, actionné dans un sens, permet de ranger précisément les deux derniers éléments (injecteurs) **10'** et **10"** du cultivateur **3** derrière les deux éléments **10** précédents, sans entraîner un encombrement excessif vers l'avant du cultivateur **3,** et actionné dans l'autre sens, permet de déployer précisément lesdits deux derniers éléments (injecteurs) **10'** et **10"** du cultivateur **3** en position de travail, les entretoises mobiles avant **16** et arrière **17** étant arrêtées dans des butoirs **21** dans lesquels elles sont maintenues dans ladite position de travail.

Dans l'exemple qui précède, le lecteur aura bien compris que les opérations inverses à celles décrites permettent de ramener l'allonge pantographe **7** de la position rétractée de transport vers la position déployée de travail. De même, il va de soi que les organes de puissance utilisés dans cet exemple peuvent être remplacés par des organes d'un autre type (électrique, électronique, électromagnétique, pneumatique, etc.) sans que cela n'altère les caractéristiques du dispositif d'articulation.

Nonobstant le fait que la présente invention a été exposée au moyen d'une description détaillée explicitant une variante d'exécution et différents aspects de l'invention, l'homme de l'art verra que la portée complète de l'invention n'est nullement limitée à l'exemple présenté ici. L'invention a une portée qui est proportionnelle aux revendications du présent brevet, incluant tous éléments ou aspects qui seraient considérés comme équivalents à ceux exposés dans les revendications principales ou dépendantes.

Partant, constituent d'autres variantes d'exécution de l'invention un dispositif complexe à plus d'un niveau de repliement, mettant par exemple en oeuvre plusieurs allonges pantographes successives avec palier intermédiaire permettant d'actionner chaque pantographe séparément, ou un dispositif à plusieurs pantographes disposés de proche en proche sans palier (à la manière du bras d'extension ciseau équipant les plateformes élévatrices), ou encore un dispositif où le segment intérieur 25 est réduit à sa plus simple expression, à savoir un dispositif quelconque de pivotement axial sur lequel seraient directement fixés les pivots 18.

### Liste des symboles de référence

- 1: Tracteur
- 2: Remorque-citerne (agricole)
- 3: Cultivateur
- 4: Section centrale
- 5: Aile latérale gauche
- 6: Aile latérale droite
- 7: Allonge pantographe gauche
- 8: Allonge pantographe droite
- 9: Poutre transversale
- 9': Première section de poutre transversale (terminale)
- 9": Deuxième section de poutre transversale (terminale)
- 9‴: Troisième section de poutre transversale (terminale)
- 10,10', 10": Injecteur ou bloc cultivateur-injecteur
- 11,11',11": Dent (égalisatrice)
- 12,12': Roue de jauge
- 13: Poutre de liaison longitudinale
- 13': Poutre de liaison longitudinale (terminale)
- 14: Entretoise de déport
- 15: Segment terminal gauche ou droit
- 16: Entretoise mobile avant (ou bras de liaison avant)
- 17: Entretoise mobile arrière (ou bras de liaison arrière)
- 18: Fixation pivotante (ou pivot)
- 19: Actionneur, vérin hydraulique double effet
- 20: Fixation pivotante du vérin hydraulique
- 21: Butoir
- 25: Segment intérieur (ou corps d'aile) gauche ou droit

## Revendications

1. Un cultivateur (3) pour le travail du sol comportant trois parties, à savoir une structure axiale portante centrale (4) et des sections ou ailes latérales (5, 6) repliables dans une position sensiblement verticale autour de ladite structure axiale portante centrale (4), ainsi qu'une structure pour ces trois parties constituée de poutres transversales (9, 9', 9", 9‴) et de poutres longitudinales (13, 13'), et supportant des outils (10, 10' ,10" ; 11, 11', 11"), **caractérisé en ce que**
chaque section ou aile latérale (5, 6) comprend un corps d'aile (25) et un segment terminal (15) reliés mécaniquement à l'aide d'au moins deux bras de liaison (16, 17) fixés d'un côté au corps d'aile (25) et de l'autre côté au segment terminal (15) au moyen de pivots (18), de sorte que le corps d'aile (25), le segment terminal (15) et les bras de liaison (16, 17) sont les éléments formant conjointement un mécanisme quadrilatéral articulé, mobile et déformable à la manière d'un pantographe ;
les pivots (18) respectifs des bras de liaison (16, 17) ayant, d'un bras de liaison à l'autre (16, 17), une position déportée latéralement considérant l'axe de déplacement du cultivateur, de sorte que lesdits bras de liaison (16, 17) se positionnent côte à côte dans ledit axe de déplacement de manière légèrement décalée lorsque le mécanisme quadrilatéral articulé est rétracté.

2. Le cultivateur (3) à mécanisme quadrilatéral articulé selon la revendication 1, **caractérisé en ce que** le segment terminal (15) est en position déployée de travail lorsque les bras de liaison (16, 17) sont en travers du sens de marche, et en position rétractée de transport lorsque les bras de liaison (16, 17) sont dans le sens de marche.

3. Le cultivateur (3) à mécanisme quadrilatéral articulé selon l'une quelconque des revendications précédentes, **caractérisé en ce que,** au sein de chaque aile (5, 6), la répartition des poutres transversales (9, 9', 9", 9‴) entre corps d'aile (25) et segment terminal (15) est telle que, une fois le mécanisme quadrilatéral rétracté, une poutre longitudinale de liaison (13') du segment terminal (15) est accolée à très faible distance de l'extrémité extérieure du corps d'aile (25).

4. Le cultivateur (3) à mécanisme quadrilatéral articulé selon l'une quelconque des revendications précédentes, **caractérisé en ce que** les éléments formant les côtés opposés du mécanisme quadrilatéral articulé, à savoir les bras de liaison (16, 17) d'une part, le corps d'aile (25) et le segment terminal (15) d'autre part, sont parallèles l'un à l'autre dans toute position du parallélogramme déformable dudit mécanisme quadrilatéral.

5. Le cultivateur (3) selon l'une quelconque des revendications précédentes, **caractérisé en ce que** deux desdits éléments (15, 16, 17, 25) du mécanisme quadrilatéral, formant côtés adjacents, sont liés par un dispositif de puissance (19) actionnable à distance.

6. Le cultivateur (3) selon l'une quelconque des revendications précédentes, **caractérisé en ce que** des butées (21) sont placées sur les poutres transversales (9, 9', 9", 9‴) pour arrêter les bras de liaison (16, 17), lors du déploiement dudit mécanisme.

7. Le cultivateur (3) selon l'une quelconque des revendications précédentes, **caractérisé en ce que** chaque aile (5, 6) est fixée sur une structure axiale (4) par rapport au sens de la marche du cultivateur de manière à pouvoir pivoter autour de cet axe d'une position de travail sensiblement horizontale à une position de transport sensiblement verticale, et vice versa.

8. Le cultivateur (3) selon la revendication 7, **caractérisé en ce que** les axes de rotation des pivots (18) sont orthogonaux aux axes de rotation des liaisons articulant les ailes (5, 6) à la structure centrale axiale (4).

9. Le cultivateur (3) selon l'une quelconque des revendications précédentes, **caractérisé en ce que** chacun des segments terminaux (15) comprend au moins une roue de jauge (12').

10. Le cultivateur (3) selon l'une quelconque des revendications précédentes, **caractérisé en ce que,** au sein du segment terminal (15), un outil spécifique (11") est fixé à ladite poutre longitudinale terminale (13') au moyen d'une entretoise de déport (14), décalant ledit outil spécifique (11") vers l'avant par rapport aux autres outils (11, 11') de même type sur une rangée de l'aile (5, 6).

11. Un engin automoteur ou un engin tracté ou semi-porté intégrant un cultivateur (3) selon l'une quelconque des revendications précédentes, de préférence celui comportant un réservoir destiné à contenir un produit de fertilisation agricole, notamment de l'engrais ou du lisier.

## Patentansprüche

1. Ein Grubber (3) zur Bodenbearbeitung bestehend aus drei Teilen, nämlich einer zentralen tragenden axialen Struktur (4) und seitlichen Abschnitten oder Flügeln (5, 6), die in eine im Wesentlichen vertikale Position um die zentrale tragende axiale Struktur (4) herum gefaltet werden können, sowie einem Rahmen für diese drei Teile, bestehend aus Querträgern (9, 9', 9", 9‴) und Längsträgern (13, 13') und Werkzeuge trägt (10, 10' ,10"; 11, 11', 11"), **dadurch gekennzeichnet, dass**
jeder Abschnitt oder Seitenflügel (5, 6) einen Flügelkörper (25) und ein Endsegment (15) umfasst, die mechanisch mithilfe von mindestens zwei Verbindungsarmen (16, 17) verbunden sind, die auf einer Seite am Flügelkörper (25) und auf der anderen Seite an Drehpunkten befestigt sind (15) mittels Drehgelenken (18) verbunden sind, so dass der Flügelkörper (25), das Endsegment (15) und die Verbindungsarme (16, 17) die Elemente sind, die zusammen einen vierseitigen, gelenkigen, beweglichen und verformbaren Mechanismus nach Art eines Pantographen bilden;
die jeweiligen Drehpunkte (18) der Verbindungsarme (16, 17) von einem Verbindungsarm (16, 17) zum anderen eine seitlich versetzte Position in Anbetracht der Bewegungsachse des Grubbers haben, so dass die Verbindungsarme (16, 17) nebeneinander in der Bewegungsachse leicht versetzt positioniert sind, wenn der vierseitige Gelenkmechanismus eingezogen ist.

2. Der Grubber (3) mit vierseitigem Gelenkmechanismus nach Anspruch 1, **dadurch gekennzeichnet, dass** das Endsegment (15) in der ausgefahrenen Position in Arbeitsstellung ist, wenn die Verbindungsarme (16, 17) quer zur Fahrtrichtung stehen, und in der eingezogenen Transportstellung, wenn die Verbindungsarme (16, 17) in Fahrtrichtung stehen.

3. Der Grubber (3) mit vierseitigem Gelenkmechanismus nach einem der vorhergehenden Ansprüche, **dadurch gekennzeichnet, dass** innerhalb jedes Flügels (5, 6) die Rückversetzungsaufteilung der Querträger (9, 9', 9", 9‴) zwischen Flügelkörper (25) und Endsegment (15) so ist, dass, wenn der vierseitige Mechanismus eingezogen ist der Längsverbindungsträger (13') des Endsegments (15) in einem sehr geringen Abstand von dem äußeren Ende des Flügelkörpers (25) angefügt ist.

4. Der Grubber (3) mit einem vierseitigen Gelenkmechanismus nach einem der vorhergehenden Ansprüche, **dadurch gekennzeichnet, dass** die Elemente, die die gegenüberliegenden Seiten des vierseitigen Gelenkmechanismus bilden, nämlich die Verbindungsarme (16, 17) einerseits, der Flügelkörper (25) und das Endsegment (15) andererseits, in jeder Stellung des verformbaren Parallelogramms des genannten vierseitigen Mechanismus parallel zueinander sind.

5. Der Grubber (3) nach einem der vorhergehenden Ansprüche, **dadurch gekennzeichnet, dass** zwei der genannten Elemente (15, 16, 17, 25) des vierseitigen Mechanismus, die benachbarte Seiten bilden, durch eine fernbetätigbare Kraftvorrichtung (19) verbunden sind.

6. Der Grubber (3) nach einem der vorhergehenden Ansprüche, **dadurch gekennzeichnet, dass** Anschläge (21) (5) an den Querträgern (9, 9', 9", 9‴) angebracht sind, um die Verbindungsarme (16, 17) beim Ausfahren des Mechanismus anzuhalten.

7. Der Grubber (3) nach einem der vorhergehenden Ansprüche **dadurch gekennzeichnet, dass** jeder Flügel (5, 6) an einer axialen Struktur (4) in Bezug auf die Fahrtrichtung des Grubbers befestigt ist, sodass er um diese Achse von einer im Wesentlichen horizontalen Arbeitsstellung in eine im Wesentlichen vertikale Transportstellung und umgekehrt geschwenkt werden kann.

8. Der Grubber (3) nach Anspruch 7, **dadurch gekennzeichnet, dass** die Drehachsen der Drehpunkte (18) orthogonal zu den Drehachsen der Verbindungen sind, die die Flügel (5, 6) an der axialen Zentralstruktur (4) anlenken.

9. Der Grubber (3) nach einem der vorhergehenden Ansprüche, **dadurch gekennzeichnet, dass** jedes der Endsegmente (15) mindestens ein Tastrad (12') umfasst.

10. Der Grubber (3) nach einem der vorhergehenden Ansprüche, **dadurch gekennzeichnet, dass** innerhalb des Endsegments (15) ein spezifisches Werkzeug (11") an dem Endlängsträger (13') mittels eines Abstandshalter (14) befestigt ist, wodurch das spezifische Werkzeug (11") in Bezug auf die anderen Werkzeuge (11, 11') desselben Typs in einer Reihe des Flügels (5, 6) nach vorne versetzt wird.

11. Eine selbstfahrende Maschine oder eine gezogene oder aufgesattelte Maschine, die einen Grubber (3) nach einem der vorhergehenden Ansprüche integriert, vorzugsweise einen solchen mit einem Tank, der dazu bestimmt ist, ein landwirtschaftliches Düngemittel, insbesondere Dünger oder Gülle, zu enthalten.

## Claims

1. A tillage cultivator (3) including three parts, namely a central carrying axial structure (4) and side sections or wings (5, 6) that can be folded in a substantially vertical position around said central carrying axial structure (4), as well as a structure for these three parts consisting of crossbeams (9, 9', 9", 9‴) and longitudinal beams (13, 13'), and carrying tools (10, 10', 10"; 11, 11', 11"), **characterized in that**
each section or side wing (5, 6) includes a wing body (25) and an end section (15) mechanically connected by means of at least two connecting arms (16, 17) attached on one side to the wing body (25) and on the other side to the end section (15) by means of pivots (18), so that the wing body (25), the end section (15) and the connecting arms (16,17) are the elements jointly forming an articulated quadrilateral mechanism, which can be moved and deformed like a pantograph;
where the respective pivots (18) of the connecting arms (16, 17) have, from one connecting arm to the other (16, 17), a side offset position with respect to the axis of travel of the cultivator, so that said connecting arms (16, 17) are positioned side by side in said axis of travel with a slight offset when the articulated quadrilateral mechanism is retracted.

2. The cultivator (3) with articulated quadrilateral mechanism according to claim 1, **characterized in that** the end section (15) is in the extended working position when the connecting arms (16, 17) are across the direction of travel, and in the retracted transport position when the connecting arms (16, 17) are in the direction of travel.

3. The cultivator (3) with articulated quadrilateral mechanism according to any of the preceding claims, **characterized in that,** within each wing (5, 6), the distribution of the crossbeams (9, 9', 9", 9‴) between the wing body (25) and the end section (15) is such that, once the quadrilateral mechanism has been retracted, a longitudinal connecting beam (13') of the end section (15) is located alongside the outer end of the wing body (25) at a very short distance.

4. The cultivator (3) with articulated quadrilateral mechanism according to any of the preceding claims, **characterized in that** the elements forming the opposite sides of the articulated quadrilateral mechanism, namely the connecting arms (16, 17) on the one hand, the wing body (25) and the end section (15) on the other hand, are parallel to each other in any position of the deformable parallelogram of said quadrilateral mechanism.

5. The cultivator (3) according to any of the preceding claims, **characterized in that** two of said elements (15, 16, 17, 25) of the quadrilateral mechanism, forming adjacent sides, are connected by a remotely operated power device (19).

6. The cultivator (3) according to any of the preceding claims, **characterized in that** stops (21) are placed on the crossbeams (9, 9', 9", 9‴) to stop the connecting arms (16, 17) when said mechanism is extended.

7. The cultivator (3) according to any of the preceding claims, **characterized in that** each wing (5, 6) is fixed on an axial structure (4) with respect to the direction of travel of the cultivator so as to be able to pivot around this axis from a substantially horizontal working position to a substantially vertical transport position, and vice versa.

8. The cultivator (3) according to claim 7, **characterized in that** the axes of rotation of the pivots (18) are orthogonal to the axes of rotation of the connections articulating the wings (5, 6) to the central axial structure (4).

9. The cultivator (3) according to any one of the preceding claims, **characterized in that** each of the end sections (15) includes at least one gauge wheel (12').

10. The cultivator (3) according to any of the preceding claims, **characterized in that,** within the end section (15), a specific tool (11") is attached to said longitudinal end beam (13') by means of an offset spacer (14), offsetting said specific tool (11") forward from other tools (11, 11') of the same type on a row of the wing (5, 6).

11. A self-propelled or towed or semi-mounted machine integrating a cultivator (3) according to any of the preceding claims, preferably one having a tank for an agricultural fertilizer product, in particular fertilizer or slurry.
